# EUROPEAN PATENT APPLICATION

(11) **EP 4 379 233 A1**
(43) Date of publication of application: **05.06.2024**
(21) Application number: 22915174.1
(22) Date of filing: 30.12.2022
(51) Int. Cl.: F16F 9/18

(54) **SHOCK ABSORBER ASSEMBLY AND VEHICLE HAVING SAME**

(30) Priority: 30.12.2021 CN 202123448219 U
(71) Applicant: BYD Company Limited, Shenzhen, Guangdong 518118 (CN)
(72) Inventor: XU, Haolun, Shenzhen, Guangdong 518118 (CN); HUANG, Fei, Shenzhen, Guangdong 518118 (CN); YANG, Zhiye, Shenzhen, Guangdong 518118 (CN)
(74) Representative: DehnsGermany Partnerschaft von Patentanwälten
(86) International application number: PCT/CN2022/143873
(87) International publication number: WO 2023/125925

(57) **Abstract**

A shock absorber assembly (2), including: a cylinder (201), a base of the cylinder (201) being configured to connect to an axle or a wheel; a piston (202), located in the cylinder (201) to define an upper chamber (2011) and a lower chamber (2012) in cooperation with the cylinder (201); and a piston rod (203), arranged on the piston (202) and configured to connect to a vehicle body, a fluid channel (204) being arranged in the piston rod (203), an upper end of the fluid channel (204) being provided with a fluid hole, the fluid hole being configured to communicate with an outside environment, the fluid channel (204) being in communication with the lower chamber (2012), and a fluid in the lower chamber (2012) being in communication with the outside environment through the fluid channel (204).

## Description

### CROSS-REFERENCE TO RELATED APPLICATIONS

The present disclosure is proposed based on Chinese Patent Application No. 202123448219.2 filed on December 30, 2021, and claims priority to the Chinese Patent Application. The entire content of the above Chinese Patent Application is incorporated herein by reference.

### FIELD

The present disclosure relates to the field of vehicles, and more specifically, to a shock absorber assembly and a vehicle having the same.

### BACKGROUND

A suspension is a device that transmits an interaction force between a vehicle body and an axle, which is one of four major components of an automobile and a key component that affects driving performance of the automobile. The suspension may transmit an acting force and torque fed back by a road surface, reduce vibration of wheels, alleviate the impact, and improve driving experience of a driver, so that a vehicle obtains ideal motion characteristics and stable driving ability. The suspension in the related art is mostly composed of a spring, a guide mechanism, a shock absorber, and the like, and a damping coefficient and spring stiffness of the shock absorber are constant. Therefore, it is difficult to give consideration to comfort and operating stability.

### SUMMARY

The present disclosure is intended to resolve one of the technical problems in the related art at least to some extent.

Therefore, an object of the present disclosure is to propose a shock absorber assembly, so as to adjust a position of a piston rod to adjust a height of a vehicle body and improve operating stability of a vehicle.

The present disclosure further proposes a vehicle having the shock absorber assembly described above.

The shock absorber assembly according to an embodiment of the present disclosure includes: a cylinder, a base of the cylinder being configured to connect to an axle or a wheel; a piston, located in the cylinder to define an upper chamber and a lower chamber in cooperation with the cylinder; and a piston rod, arranged on the piston and configured to connect to a vehicle body, a fluid channel being arranged in the piston rod, an upper end of the fluid channel being provided with a fluid hole, the fluid hole being configured to communicate with an outside environment, the fluid channel being in communication with the lower chamber, and a fluid in the lower chamber being in communication with the outside environment through the fluid channel.

According to the shock absorber assembly in the embodiment of the present disclosure, the fluid channel is arranged in the piston rod, so that a reduction in weight and cost saving may be realized. In addition, since the fluid channel is in communication with the lower chamber, a fluid is allowed to flow in and out of the lower chamber, so that the position of the piston rod can be adjusted to adjust the height of the vehicle body, and the operating stability of the vehicle can be improved without compromising vehicle comfort, thereby effectively resolving the contradiction between the vehicle comfort and the handling stability. Moreover, the shock absorber assembly may help realize stable connections of oil passages to prevent wear at joints as a result of vibration and prevent liquid leakages at the joints as much as possible.

In some embodiments of the present disclosure, a first interface is further formed on a side wall of the cylinder, and the first interface is arranged close to an upper end of the cylinder and is in communication with the upper chamber.

In some embodiments of the present disclosure, a second interface is further formed on the side wall of the cylinder, and the second interface is arranged close to a lower end of the cylinder and is in communication with the lower chamber.

In some embodiments of the present disclosure, the shock absorber assembly further includes a buffer. An upper end of the piston rod extends out of the cylinder, the buffer is sleeved on the piston rod, and the buffer is configured to connect to the vehicle body. The upper end of the piston rod extends out of the buffer and is configured to be spaced apart from the vehicle body.

In some embodiments of the present disclosure, the shock absorber assembly further includes a cover. The buffer is configured to connect to the vehicle body through the cover.

Optionally, the cover is a wheel cover.

In some embodiments of the present disclosure, the shock absorber assembly further includes a connector. The connector is in communication with the upper end of the fluid channel and configured to communicate with the outside environment.

Optionally, a cavity is formed in the connector, and a third interface and a fourth interface are formed on the connector. The third interface and the fourth interface are both in communication with the cavity. An extension direction of the third interface is perpendicular to an extension direction of the fourth interface. The third interface is in communication with the upper end of the fluid channel, and the fourth interface is configured to communicate with the outside environment.

In some embodiments of the present disclosure, the shock absorber assembly further includes a spring. The spring abuts between the buffer and the cylinder.

In some embodiments of the present disclosure, a support member is arranged on the cylinder, and the spring abuts between the buffer and the support member.

A vehicle according to an embodiment of the present disclosure includes the shock absorber assembly according to any of the above embodiments of the present disclosure.

According to the vehicle in the embodiment of the present disclosure, the height of the vehicle body can be adjusted, and the operating stability of the vehicle can be improved without compromising vehicle comfort, thereby effectively resolving the contradiction between the vehicle comfort and the handling stability. Moreover, by using a hollow piston rod, a reduction in weight may be realized, and the fluid channel defined by the hollow piston rod may allow a fluid to enter or be discharged to adjust the position of the piston rod. The adjustment method is simple and has high reliability, low costs, and a rapid response speed. Moreover, the shock absorber assembly may help realize stable connections of oil passages to prevent wear at joints as a result of vibration and prevent liquid leakages at the joints as much as possible.

Additional aspects and advantages of the present disclosure are to be partially given in the following description, and partially become apparent in the following description or learned through the practice of the present disclosure.

### BRIEF DESCRIPTION OF THE DRAWINGS

FIG. 1 is a schematic diagram of a shock absorber assembly according to an embodiment of the present disclosure.
FIG. 2 is a cross-sectional view of the shock absorber assembly shown in FIG. 1.
FIG. 3 is a schematic diagram of a shock absorber assembly according to some embodiments of the present disclosure.
FIG. 4 is a schematic diagram of a shock absorber assembly according to some other embodiments of the present disclosure.

### Reference Numerals:

Shock absorber assembly 2, shock absorber 200, cylinder 201, upper chamber 2011, lower chamber 2012, first interface 2013, second interface 2014, piston 202, piston rod 203, fluid channel 204, spring 205, buffer 206, cover 207, connector 208, third interface 2081, fourth interface 2082, support member 209, and fixing hole 2015.

### DETAILED DESCRIPTION

Embodiments of the present disclosure are described in detail below, and examples of the embodiments are shown in the accompanying drawings, where the same or similar elements or elements having the same or similar functions are represented by the same or similar reference numerals throughout the description. The embodiments described below with reference to the accompanying drawings are exemplary and intended to explain the present disclosure, and should not be construed as a limitation on the present disclosure.

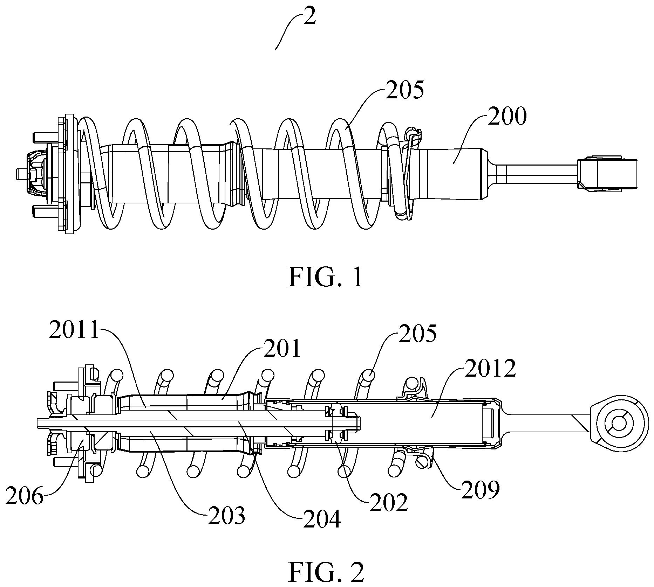

A shock absorber assembly 2 according to an embodiment of the present disclosure is described below with reference to FIG. 1 to FIG. 4. The shock absorber assembly 2 is used on a vehicle, and the shock absorber assembly 2 is configured to connect an axle and a vehicle body of the vehicle.

The shock absorber assembly 2 according to the embodiment of the present disclosure includes a cylinder 201, a piston 202, and a piston rod 203. A base of the cylinder 201 is configured to connect to the axle or a wheel. In some examples of the present disclosure, as shown in FIG. 1 to FIG. 3, the base of the cylinder 201 is provided with a fixing hole 2015, and the axle passes through the fixing hole 2015 to connect the cylinder 201 to the axle.

The piston 202 is located in the cylinder 201 to define an upper chamber 2011 and a lower chamber 2012 in cooperation with the cylinder 201. The piston rod 203 is arranged on the piston 202, and the piston rod 203 is configured to connect to the vehicle body. A fluid channel 204 is arranged in the piston rod 203. An upper end of the fluid channel 204 is provided with a fluid hole, and the fluid channel 204 is in communication with the lower chamber 2012.

The fluid hole is configured to communicate with an outside environment, and a fluid in the lower chamber 2012 is in communication with the outside environment through the fluid channel 204.

Specifically, the vehicle includes a hydraulic suspension system. The hydraulic suspension system has a liquid storage device. A fluid in the liquid storage device may enter the fluid channel 204 through the fluid hole, or the fluid in the lower chamber 2012 is discharged into the liquid storage device through the fluid hole.

Specifically, the piston rod 203 is formed into a hollow structure to define the fluid channel 204, the fluid may be allowed to enter the lower chamber 2012 through the fluid channel 204 to push the piston 202 to move upward, and the piston 202 is moved to push the piston rod 203 to move.

When the piston rod 203 moves downward under external pressure, the fluid in the lower chamber 2012 is discharged from the fluid channel 204 to enter a hydraulic oil channel.

It may be understood that the vehicle may encounter various road conditions during driving. The suspension system of the vehicle in the related art, once selected, cannot be adjusted during driving, so that the conventional suspension can only ensure that the automobile achieves optimal performance matching under a specific road and speed condition, and can only passively bear an acting force of the ground on the vehicle body, but suspension parameters cannot be changed in accordance with different roads and speeds, and the acting force of the ground on the vehicle body cannot be actively controlled.

The shock absorber assembly 2 according to the embodiment of the present disclosure is applied to a vehicle, which enables a fluid in the hydraulic oil channel to enter the lower chamber 2012 so that the piston rod 203 moves upward to lift the vehicle body when a height of the vehicle body needs to be raised. When the vehicle body is subjected to an external impact force, the piston rod 203 may move downward to cushion the impact force.

It may be understood that during driving of the vehicle, the axle may experience vibration such as shaking relative to the vehicle body. When the shock absorber assembly 2 according to the embodiment of the present disclosure is mounted to the vehicle, the cylinder 201 is mounted to the axle or the wheel, and the piston rod 203 is connected to the vehicle body. It may be understood that a top end of the piston rod 203 is stationary relative to the vehicle body, and the cylinder 201 may move relative to the piston rod 203 along with the axle. Since the fluid channel 204 of the piston rod 203 is enabled to communicate with the outside environment through oil passages, influence of vibration of the axle on joints of the oil passages may be reduced, stable connections of the oil passages may be realized, wear at the joints of the oil passages and the liquid storage device for storing a fluid in the outside environment may be reduced, and wear at the joints of the oil passages and the piston rod 203 may be reduced.

According to the shock absorber assembly 2 in the embodiment of the present disclosure, the fluid channel 204 is arranged in the piston rod 203, so that a reduction in weight and cost saving may be realized. In addition, since the fluid channel 204 is in communication with the lower chamber 2012, a fluid is allowed to flow in and out of the lower chamber 2012, so that the position of the piston rod 203 can be adjusted to adjust the height of the vehicle body, and the operating stability of the vehicle can be improved without compromising vehicle comfort, thereby effectively resolving the contradiction between the vehicle comfort and the handling stability. Moreover, the shock absorber assembly may help realize stable connections of oil passages to prevent wear at joints as a result of vibration and prevent liquid leakages at the joints as much as possible.

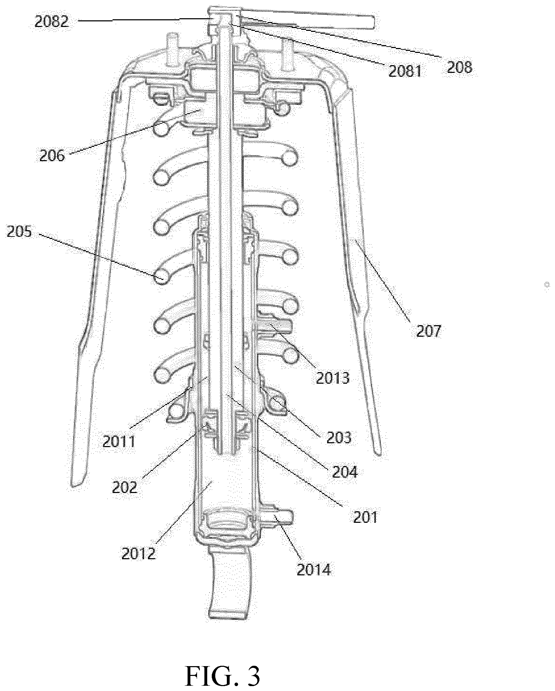

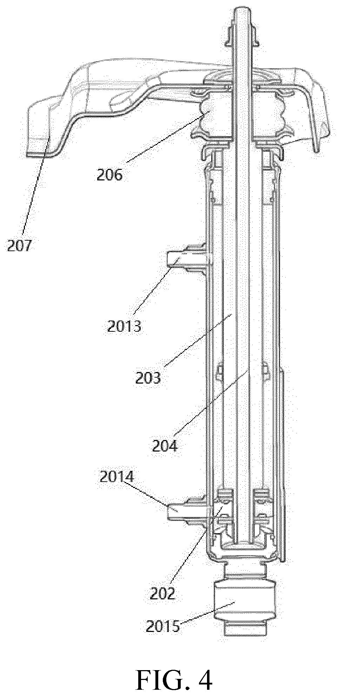

As shown in FIG. 3 and FIG. 4, in some embodiments of the present disclosure, a first interface 2013 is further formed on a side wall of the cylinder 201, and the first interface 2013 is arranged close to an upper end of the cylinder 201 and is in communication with the upper chamber 2011. Therefore, the first interface 2013 is provided, so that the first interface 2013 may be in communication with the outside environment. When the piston rod 203 moves, a fluid in the upper chamber 2011 may be allowed to enter or be discharged from the upper chamber 2011 through the first interface 2013, which further facilitates the adjustment of the position of the piston rod 203 through the fluid to achieve the purpose of adjusting the height of the vehicle body of the vehicle.

As shown in FIG. 3 and FIG. 4, in some embodiments of the present disclosure, a second interface 2014 is further formed on the side wall of the cylinder 201, and the second interface 2014 is arranged close to a lower end of the cylinder 201 and is in communication with the lower chamber 2012. Therefore, the second interface 2014 is provided, so that the second interface 2014 may be in communication with the outside environment. When the piston rod 203 moves, a fluid in the lower chamber 2012 may be allowed to enter or be discharged from the lower chamber 2012 through the second interface 2014, which further facilitates the adjustment of the position of the piston rod 203 through the fluid to achieve the purpose of adjusting the height of the vehicle body of the vehicle.

As shown in FIG. 1 to FIG. 4, in some embodiments of the present disclosure, the shock absorber assembly 2 further includes a buffer 206. An upper end of the piston rod 203 extends out of the cylinder 201, the buffer 206 is sleeved on the piston rod 203, and the buffer 206 is configured to connect to the vehicle body. The upper end of the piston rod 203 extends out of the buffer 206 and is configured to be spaced apart from the vehicle body. In other words, when the shock absorber assembly 2 of the present disclosure is mounted to the vehicle, the buffer 206 is mounted to the vehicle body, and the upper end of the piston rod 203 is spaced apart from the vehicle body, so that the vibration may be buffered through arrangement of the buffer 206. In addition, since the upper end of the piston rod 203 extends out of the buffer 206, the influence of the vibration of the axle on the upper end of the piston rod 203 may be further reduced, so as to further prevent the wear at the joints due to vibration, and prevent the liquid leakages at the joints as much as possible.

In some embodiments of the present disclosure, as shown in FIG. 3 and FIG. 4, the shock absorber assembly 2 further includes a cover 207. The buffer 206 is configured to connect to the vehicle body through the cover 207. In other words, the cover 207 is connected with the vehicle body, and the buffer 206 is arranged between the cover 207 and the cylinder 201, so that connection reliability between the shock absorber assembly 2 and the vehicle body may be improved. Optionally, the cover 207 is a wheel cover. It may be understood that the wheel cover refers to a fender and a mudguard on the vehicle. To be specific, the existing part of the vehicle is used as the cover 207, to reduce costs.

In some embodiments of the present disclosure, as shown in FIG. 3, the shock absorber assembly 2 further includes a connector 208. The connector 208 is in communication with the upper end of the fluid channel 204 and configured to communicate with the outside environment. Therefore, the connector 208 is arranged to facilitate connection of the shock absorber assembly 2 to the outside environment.

As shown in FIG. 3, optionally, a cavity 208 is formed in the connector, and a third interface 2081 and a fourth interface 2082 are formed on the connector 208. The third interface 2081 and the fourth interface 2082 are both in communication with the cavity. An extension direction of the third interface 2081 is perpendicular to an extension direction of the fourth interface 2082. The third interface 2081 is in communication with the upper end of the fluid channel 204, and the fourth interface 2082 is configured to communicate with the outside environment. Therefore, the third interface 2081 and the fourth interface 2082 are provided, so that a flow direction of a fluid flowing out of the fluid channel 204 may be changed, and an arrangement position of the liquid storage device and an arrangement position of the shock absorber assembly 2 are not limited.

As shown in FIG. 1 to FIG. 4, in some embodiments of the present disclosure, the shock absorber assembly 2 further includes a spring 205. The spring 205 abuts between the buffer 206 and the cylinder 201. Therefore, the spring 205 is arranged, to further improve the vibration absorption effect of the shock absorber assembly 2.

Optionally, a support member 209 is arranged on the cylinder 201, and the spring 205 abuts between the buffer 206 and the support member 209. Therefore, the support member 209 is arranged to support the spring 205, to facilitate assembly of the spring 205. In some examples of the present disclosure, the support member 209 may be sleeved on a peripheral wall of the cylinder 201, and the support member 209 and the cylinder 201 may be connected through interference fit or welding, to ensure reliable fixation of the support member 209.

A first connection port and a second connection port are arranged to realize interconnection of left and right shock absorbers or interconnection of front and rear shock absorbers, to realize a roll prevention or pitch prevention function.

In some embodiments of the present disclosure, the first connection port of the left front shock absorber assembly is in communication with the second connection port of the right front shock absorber assembly, so that an upper chamber of the left front shock absorber assembly is in communication with a lower chamber of the right front shock absorber assembly. The second connection port of the left front shock absorber assembly is in communication with the first connection port of the right front shock absorber assembly, so that a lower chamber of the left front shock absorber assembly is in communication with an upper chamber of the right front shock absorber assembly.

Similarly, the first connection port of the left rear shock absorber assembly is in communication with the second connection port of the right rear shock absorber assembly, so that an upper chamber of the left rear shock absorber assembly is in communication with a lower chamber of the right rear shock absorber assembly. The second connection port of the left rear shock absorber assembly is in communication with the first connection port of the right rear shock absorber assembly, so that a lower chamber of the left rear shock absorber assembly is in communication with an upper chamber of the right rear shock absorber assembly. In this way, the communication of the left and right shock absorbers is realized, and then the roll prevention function is realized.

Specifically, when a vehicle tends to roll, a side of the shock absorber is in compression, for example, the left front shock absorber assembly and the left rear shock absorber assembly are compressed. In this case, a fluid in the lower chamber of the left front shock absorber assembly may enter the upper chamber of the right front shock absorber assembly, and a fluid in the lower chamber of the left rear shock absorber assembly may enter the upper chamber of the right rear shock absorber assembly, to lower a piston rod of the right front shock absorber assembly and a piston rod of the right rear shock absorber assembly to realize a consistent height on the left and on the right.

In some embodiments of the present disclosure, the first connection port of the left front shock absorber assembly is in communication with the second connection port of the left rear shock absorber assembly, and the second connection port of the left front shock absorber assembly is in communication with the first connection port of the left rear shock absorber assembly, so that the upper chamber of the left front shock absorber assembly is in communication with the lower chamber of the left rear shock absorber assembly, the lower chamber of the left front shock absorber assembly is in communication with the upper chamber of the left rear shock absorber assembly, the upper chamber of the right front shock absorber assembly is in communication with the lower chamber of the right rear shock absorber assembly, and the lower chamber of the right front shock absorber assembly is in communication with the upper chamber of the right rear shock absorber assembly. In this way, communication between shock absorbers on a front axle and shock absorbers on a rear axle is realized to realize the pitch prevention function.

Specifically, when the vehicle tends to pitch, one of piston rods in a front side and a rear side is compressed. For example, a piston rod of the left front shock absorber assembly and a piston rod of the right front shock absorber assembly are compressed. The fluid in the lower chamber of the left front shock absorber assembly may flow into the upper chamber of the left rear shock absorber assembly, and a fluid in the lower chamber of the right front shock absorber assembly may flow into the upper chamber of the right rear shock absorber assembly, to lower a piston rod of the left rear shock absorber assembly and a piston rod of the right rear shock absorber assembly to realize a consistent height in the front and in the rear.

A vehicle according to an embodiment of the present disclosure includes the shock absorber assembly 2 according to any of the above embodiments of the present disclosure.

For the vehicle according to the embodiment of the invention, the height of the vehicle body may be adjusted depending on a road condition. For example, when the vehicle passes through a rugged mountain road, a lifting mode may be enabled, so as to raise the center of mass of the vehicle and improve driving stability of the vehicle. When influence of the vehicle body on the driving speed needs to reduced, a height reduction mode may be enabled to lower the center of mass of the vehicle. Certainly, it may be understood that the above are only merely exemplary descriptions, and the height of the vehicle body may also be adjusted based on actual requirements during driving.

According to the vehicle in the embodiment of the present disclosure, the height of the vehicle body can be adjusted, and the operating stability of the vehicle can be improved without compromising vehicle comfort, thereby effectively resolving the contradiction between the vehicle comfort and the handling stability. Moreover, by using the hollow piston rod 203, a reduction in weight may be realized, and the fluid channel 204 defined by the hollow piston rod 203 may allow a fluid to enter or be discharged to adjust the position of the piston rod 203. The adjustment method is simple and has high reliability, low costs, and a rapid response speed. Moreover, the shock absorber assembly may help realize stable connections of oil passages to prevent wear at joints as a result of vibration and prevent liquid leakages at the joints as much as possible.

In the descriptions of the present disclosure, it should be understood that orientation or position relationships indicated by the terms such as "center", "longitudinal", "transverse", "length", "width", "thickness", "up", "down", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are merely used for ease and brevity of description of the present disclosure, rather than indicating or implying that the mentioned device or element needs to have a particular orientation or be constructed and operated in a particular orientation. Therefore, such terms should not be construed as a limitation on the present disclosure.

In addition, terms "first" and "second" are merely for the purpose of description, and cannot be construed as indicating or implying relative importance or implicitly specifying a quantity of technical features indicated. Therefore, a feature limited by "first" or "second" may explicitly or implicitly include one or more of the features. In the description of the present disclosure, "multiple" means more than two, unless otherwise explicitly and specifically defined.

In the present disclosure, unless otherwise explicitly specified or defined, the terms such as "mount", "connected", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two elements, or an interaction relationship between two elements. For a person of ordinary skill in the art, the specific meanings of the above terms in the present disclosure may be understood according to specific circumstances.

In the present disclosure, unless otherwise explicitly specified and defined, a first feature being "above" or "below" a second feature may mean direct contact between the first feature and the second feature, or indirect contact between the first feature and the second feature by using an intermediate medium. Moreover, the first feature being "over", "above", and "on" the second feature may mean that the first feature is directly above or obliquely above the second feature, or merely mean that the first feature is at a higher horizontal position than the second feature. The first feature being "below", "under", and "beneath" the second feature may mean that the first feature is right below or obliquely below the second feature, or merely indicate that the first feature is at a lower horizontal position than the second feature.

In the descriptions of this specification, the description of reference terms such as "an embodiment", "some embodiments", "an example", "a specific example", or "some examples" mean that specific features, structures, materials, or characteristics described in combination with the embodiment or the example are included in at least one embodiment or example of the present disclosure. In this specification, schematic descriptions of the above terms are not necessarily directed at the same embodiment or example. Besides, the specific features, the structures, the materials, or the characteristics that are described may be combined in proper manners in any one or more embodiments or examples. In addition, a person skilled in the art may integrate or combine different embodiments or examples described in this specification and features of the different embodiments or examples as long as they do not contradict each other.

Although the embodiments of the present disclosure have been shown and described above, it may be understood that, the above embodiments are exemplary and should not be construed as a limitation on the present disclosure. A person of ordinary skill in the art may make changes, modifications, replacements, or variations to the above embodiments within the scope of the present disclosure.

## Claims

1. A shock absorber assembly, comprising:
a cylinder, a base of the cylinder being configured to connect to an axle or a wheel;
a piston, located in the cylinder to define an upper chamber and a lower chamber in cooperation with the cylinder; and
a piston rod, arranged on the piston and configured to connect to a vehicle body, a fluid channel being arranged in the piston rod, an upper end of the fluid channel being provided with a fluid hole, the fluid hole being configured to communicate with an outside environment, the fluid channel being in communication with the lower chamber, and a fluid in the lower chamber being in communication with the outside environment through the fluid channel.

2. The shock absorber assembly according to claim 1, wherein a first interface is further formed on a side wall of the cylinder, and the first interface is arranged close to an upper end of the cylinder and is in communication with the upper chamber.

3. The shock absorber assembly according to claim 1 or 2, wherein a second interface is further formed on the side wall of the cylinder, and the second interface is arranged close to a lower end of the cylinder and is in communication with the lower chamber.

4. The shock absorber assembly according to any of claims 1 to 3, further comprising a buffer, an upper end of the piston rod extending out of the cylinder, the buffer being sleeved on the piston rod, the buffer being configured to connect to the vehicle body, and the upper end of the piston rod extending out of the buffer and being configured to be spaced apart from the vehicle body.

5. The shock absorber assembly according to claim 4, further comprising a cover, the buffer being configured to connect to the vehicle body through the cover.

6. The shock absorber assembly according to claim 5, wherein the cover is a wheel cover.

7. The shock absorber assembly according to any of claims 4 to 6, further comprising a connector, the connector being in communication with the upper end of the fluid channel and configured to communicate with the outside environment.

8. The shock absorber assembly according to claim 7, wherein a cavity is formed in the connector, a third interface and a fourth interface are formed on the connector, the third interface and the fourth interface are both in communication with the cavity, an extension direction of the third interface is perpendicular to an extension direction of the fourth interface, the third interface is in communication with the upper end of the fluid channel, and the fourth interface is configured to communicate with the outside environment.

9. The shock absorber assembly according to any of claims 4 to 8, further comprising a spring, the spring abutting between the buffer and the cylinder.

10. The shock absorber assembly according to claim 9, wherein a support member is arranged on the cylinder, and the spring abuts between the buffer and the support member.

11. A vehicle, comprising the shock absorber assembly according to any of claims 1 to 10.
